# EUROPÄISCHE PATENTANMELDUNG

(11) **EP 0 626 189 A2**
(43) Veröffentlichungstag der Anmeldung: **30.11.1994**
(21) Anmeldenummer: 94101097.7
(22) Anmeldetag: 26.01.1994
(51) Int. Cl.: B01D 46/30, E03F 5/08

(54) **Desodorierungsfilter**

(30) Priorität: 03.02.1993 DE 9301464 U
(71) Anmelder: Störk-Küfers, Paul, D-78576 Emmingen (DE)
(72) Erfinder: Störk, Paul,, D-78576 Emmingen, (DE); Störk, Hans,, D-78576 Emmingen, (DE)
(74) Vertreter: Weiss, Peter, Dr. rer. nat.

(57) **Zusammenfassung**

Bei einem Desodorierungsfilter zum Einsetzen in einen Kanalschacht weist ein Filtergehäuse (1) einen Filterraum (19) auf, in dem Filtermaterial (16) angeordnet ist. Das Filtergehäuse (1) ist von einem Fallrohr (13) durchzogen, welches dem Ableiten von Wasser dient, das von einem Auffangtrichter (4) unterhalb eines Sandfanges (6) od. dgl. aufgefangen ist. In dem Filtergehäuse (1) bzw. in dem Filterraum (19) ist ein Stützgerüst für das Filtermaterial (16) angeordnet.

## Beschreibung

Die Erfindung betrifft einen Desodorierungfilter zum Einsetzen in einen Kanalschacht mit einem Filtergehäuse, welches einen Filterraum aufweist, in dem Filtermaterial angeordnet ist, wobei das Filtergehäuse von einem Fallrohr durchzogen ist, welches dem Ableiten von Wasser dient, das von einem Auffangtrichter unterhalb eines Sandfanges od. dgl. aufgefangen ist.

Übliche kommunale Kanalsysteme bestehen aus einem Kanalsystem, welches durch Kanalschächte zugänglich ist. Diese Kanalschächte dienen zum einen dem Ableiten von beispielsweise Oberflächenwasser, zum anderen aber auch der Inspektion des gesamten Kanalsystems.

Bekannt ist, daß in diesen Kanalsystemen unangenehme Gerüche entstehen oder aber Abwässer mit unangenehmen Gerüchen weitergeleitet werden. Diese Gerüche steigen durch die Kanalschächte nach oben und entweichen, weshalb jeder Kanalschacht stinkt. Um diesen Nachteil zu beseitigen, sind Desodorierungfilter entwickelt worden, wie sie beispielweise in dem Deutschen Gebrauchsmuster 86 01 761 beschrieben sind. Diese Desodorierungsfilter arbeiten auf biologischer Basis, wobei entsprechendes Filtermaterial aus Naturfasern mit entsprechenden Bakterien geimpft ist, die der Abluft den unangenehmen Geruch nehmen. Das Filtermaterial befindet sich dort in einem Filterraum, der von einem Gehäusemantel umschlossen ist und nach oben bzw. unten von einem perphorierten Deckel bzw. Boden begrenzt ist. Mittig durchzieht diesen Filterraum ein Fallrohr, in welches Oberflächenwasser über eine trichterförmige Schale abgeleitet wird. Diese Schale ist unterhalb des Sandfanges angeordnet. Der Sandfang selbst ist über Laschen mit dem Filtergehäuse verbunden, so daß das Filtergehäuse über dem Sandfang in dem Schacht gehalten wird.

Bei diesem Desodorierungsfilter hat sich zum einen sehr nachteilig herausgestellt, daß das Filtermaterial im Laufe der Zeit zusammensackt und damit einen Luftdurchtritt vermindert bzw. gänzlich unmöglich macht. Damit wird wiederum die Filterwirkung des Desodorierungsfilters aufgehoben.

Ferner besteht bei diesem Filter die Möglichkeit, das Oberflächenwasser zusammen mit beispielsweise Schmutz und Salz seitlich am Sandfang vorbei in den Filterraum eintreten kann und so das Filtermaterial zusätzlich zerstört, verdichtet bzw. ungünstig beeinflußt.

Der vorliegenden Erfindung liegt die Aufgabe zugrunde, diese Nachteile zu beseitigen. Es soll ein einfach einzusetzender und zu handhabender Filter entwickelt werden, bei dem die Standzeit bzw. Lebensdauer des Filtermaterials in erheblichem Maße erhöht wird.

Zur Lösung dieser Aufgabe führt, daß im Filtergehäuse bzw. in dem Filterraum ein Stützgerüst für das Filtermaterial angeordnet ist.

Dieses Stützgerüst kann verschiedene Ausgestaltungen aufweisen. Zum einen ist daran gedacht, daß der Filterraum mit beliebig angeordneten Querstreben durchzogen ist. Beispielsweise könnten hier in den Filterraum Holzstäbe eingesetzt werden, die länger sind als der Durchmesser des Filterraumes. Es ist auch möglich, bestimmte Körper aus Kunststoff, Metall, Keramik od. dgl. in das Filtermaterial einzubetten, wobei diese Körper ein Zusammensacken des Filtermaterials verhindern. Hier sind vielfältige Variationen denkbar und sollen vom Erfindungsgedanken umfaßt sein.

In einem bevorzugten Ausführungsbeispiel ist in den Filterraum zwischen Boden und Deckel zumindest ein Zwischenboden eingezogen, so daß über die gesamte Länge des Filtergehäuses nicht ein durchgehender Filterraum sondern mehrere abgeteilte Filterräume vorhanden sind. Dadurch wird in hervorragender Weise gewährleistet, daß das Filtermaterial nicht zusammensackt, sondern über eine lange Lebensdauer einen Luftdurchtritt zuläßt, durch den erst die geeignete Filterwirkung erzielt wird.

Damit ein Luftdurchtritt stattfinden kann, sind Boden und Deckel sowie der bzw. die Zwischenböden mit Luftschlitzen durchsetzt. Im vorliegenden Ausführungsbeispiel ordnen sich diese Luftschlitze teilkreisförmig um das Fallrohr an. Die Luftschlitze haben sich deshalb als besser erwiesen, da sie im Gegensatz zu anderen Perforationen einen sehr hohen freien Luftdurchtrittsquerschnitt ergeben.

Des weiteren soll das Filtergehäuse insgesamt aus einem teilzylindrischen Gehäusemantel bestehen, der mit einer entfernbaren Frontplatte abgedeckt ist. Das bedeutet, daß die Befüllung des Filterraumes mit Filtermaterial von vorne her stattfinden kann, so daß auch ein Austausch dieses Filtermaterials erheblich erleichtert ist.

Eine weitere wesentliche Verbesserung liegt in der Verbindung zwischen Sandfang, der im übrigen DIN-genormt ist (DIN 12 21) und dem Filtergehäuse. Während bislang das Filtergehäuse an dem Sandfang hing, ist erfindungsgemäß der Sandfang in den Auffangtrichter eingesetzt und dort beispielsweise über Schrauben mit dem Auffangtrichter verbunden. Hierdurch wird zum einen eine wesentlich bessere Halterung gewährleistet. Zum anderen umfängt aber den Sandfang eine Ringwand des Auffangtrichters, wobei diese Ringwand bevorzugt konisch ausgebildet ist. Da der Sandfang in einem Durchmesser in geeignetem Maße dem Kanalschachtdurchmesser angepaßt ist, bewirkt die konische Ausgestaltung der Ringwand eine weitgehende Erfassung des freien Kanalquerschnittes, so daß kaum Oberflächenwasser seitlich an dem Auffangtrichter vorbeifließen kann. Hierdurch wird verhindert, daß Oberflächenwasser mit Schmutz, Salz od. dgl. in den Filterraum eintreten kann. Dies ist ein weiterer wesentlicher Vorteil der Erfindung, da hierdurch das Filtermaterial geschont wird. Die Filterwirkung bleibt über einen langen Zeitpunkt aufrecht erhalten.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht eines erfindungsgemäßen Desodorierungsfilters;
Figur 2 eine teilweise aufgebrochen dargestellte Frontansicht des Desodorierungsfilters gemäß Figur 1;
Figur 3 ein Frontansicht des Desodorierungsfilters gemäß Figur 1 mit abgenommener Frontwand;
Figur 4 eine Draufsicht auf den Desodorierungsfilter gemäß Figur 1 ohne Sandfang;
Figur 5 einen Querschnitt durch den Desodorierungsfilter gemäß Figur 3 entlang Linie V-V.

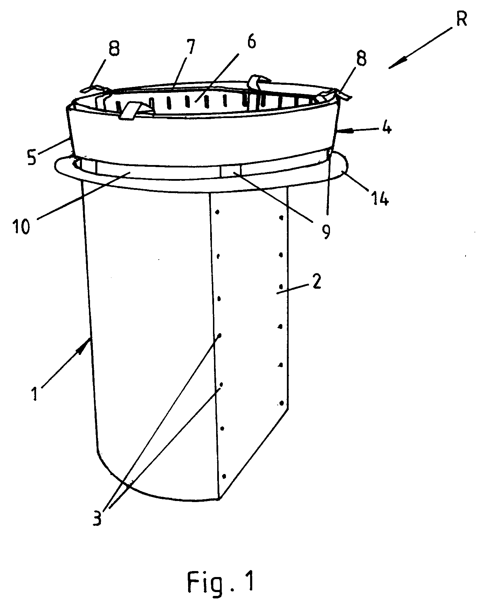

Ein Desodorierungsfilter R gemäß Figur 1 ist dazu geeignet, in einen nicht näher gezeigten Kanalschacht eingesetzt zu werden. Hierzu weist der Desodorierungsfilter R ein teilzylindrisch ausgebildetes Filtergehäuse 1 auf, welches durch eine Frontplatte 2 abgedeckt ist. Diese Frontplatte 2 ist über Befestigungselemente 3 mit dem Filtergehäuse 1 verbunden, so daß die Frontplatte 2 entfernbar ausgestaltet und damit ein später beschriebenes Filtermaterial in dem Filtergehäuse 1 zugänglich ist.

Dem Filtergehäuse 1 ist nach oben hin ein Auffangtrichter 4 angeformt, dessen umlaufende Ringwand 5 bevorzugt konisch ausgebildet ist. In Gebrauchslage umfängt diese Ringwand 5 einen Sandfang 6, welcher handelsüblich ist und deshalb hier nicht näher beschrieben werden soll. Der Sandfang 6 ist über entsprechende, nicht näher gezeigte Befestigungselemente mit dem Auffangtrichter 4 verbunden, so daß der gesamte Desodorierungsfilter R über einen Bügel 7 des Sandfanges 6 angehoben und in einen Schacht eingesetzt werden kann. Entsprechende Seitenlaschen 8 dienen dann zum Festlegen des Desodorierungsfilters R innerhalb des Schachtes.

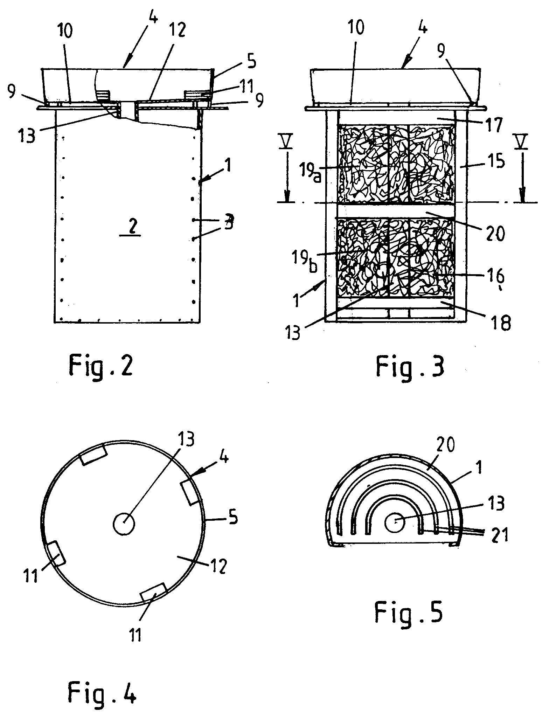

Der Auffangtrichter 4 ist im übrigen über Stege 9 mit dem Filtergehäuse 1 verbunden, wobei sich zwischen den Stegen 9 Auslaßöffnungen 10 befinden. Bei der Draufsicht auf den Auffangtrichter 4 gemäß Figur 4 sind Abstützungen 11 auf einem Boden 12 erkennbar, welcher Verstärkungen für das Festlegen der Befestigungselemente für den Sandfang 6 bilden. Der Boden 12 selbst verläuft etwas geneigt trichterförmig, wie dies in Figur 2 erkennbar ist. Er neigt sich zu einem mittig angeordnetem Fallrohr 13, welches auch das Filtergehäuse 1 durchsetzt. Über dieses Fallrohr 13 wird Oberflächenwasser in den Schacht bzw. das darunter angeordnete Kanalsystem abgeleitet. Eine nicht näher gezeigte untere Öffnung des Fallrohres 13 nach dem Filtergehäuse 1 ist von einer ebenfalls nicht näher gezeigten Rückschlagklappe verschlossen. Hierdurch wird ein Entweichen von Abluft durch das Fallrohr 13 vermieden.

Im Bereich eines oberen Randes wird das Filtergehäuse 1 von einem gummiartigen Ringkragen 14 umfangen, über welchen eine Abdichtung gegenüber dem Kanalschacht stattfindet. Dieser Ringkragen 14 vermeidet ebenfalls ein Entweichen von Abluft entlang den Außenrändern des Desodorierungsfilters R.

Durch die teilzylindrische Ausgestaltung des Filtergehäuses 1 wird ermöglicht, daß dieser Desodorierungsfilter R auch dann Anwendung finden kann, wenn sich in dem Kanalschacht Steigeisen befinden. In diesem Fall ist die Frontplatte 2 zu den Steigeisen hin orientiert.

Das Filtergehäuse 1 umschließt mit einem Gehäusemantel 15 gemäß Figur 3 einen Filterraum, der mit Filtermaterial 16 gefüllt ist. Dabei ist der Filterraum nach oben durch einen Deckel 17 und nach unten durch einen Boden 18 begrenzt. Ferner ist er in zwei Filterräume 19a und 19b durch einen Zwischenboden 20 unterteilt. Dieser Zwischenboden 20 verhindert, daß das Filtermaterial zusammensackt. Im gezeigten Ausführungsbeispiel ist der Zwischenboden 20 etwa parallel zum Boden 18 bzw. Deckel 17 angeordnet. Der Zwischenboden 20 kann auch aus anderen beliebigen Stützelementen bestehen, beispielsweise Querstreben, Querbänder od. dgl.. Diese brauchen nicht parallel zum Boden 18 verlaufen, sondern können auch in einer beliebigen Anordnung den Filterraum 19 durchziehen. Wesentlich ist allein, daß durch ein Stützgerüst das Filtermaterial die entsprechend notwendige Abstützung erhält.

Deckel 17, Boden 18 und Zwischenboden 20 sind luftdurchlässig ausgestaltet. In Figur 5 ist eine Draufsicht auf den Zwischenboden 20 möglich. In diesem Zwischenboden 20 sind Luftschlitze 21 eingeformt, welche im vorliegenden Ausführungsbeispiel etwa konzentrisch um das Fallrohr 13 angeordnet sind. Selbstverständlich sind hier auch andere Ausgestaltungen möglich.

Abluft aus einem unter dem Desodorierungsfilter R angeordneten Kanalsystems kann bei diesem Desodorierungsfilter R nur durch den Boden 18, die Filterräume 19b und 19a sowie den dazwischen angeordneten Zwischenboden 20, den Deckel 17 und die Auslaßöffnungen 10 außen entlang der Ringwand 5 entweichen.

## Patentansprüche

1. Desodorierungsfilter zum Einsetzen in einen Kanalschacht mit einem Filtergehäuse (1), welches einen Filterraum (19) aufweist, in dem Filtermaterial (16) angeordnet ist, wobei das Filtergehäuse (1) von einem Fallrohr (13) durchzogen ist, welches dem Ableiten von Wasser dient, das von einem Auffangtrichter (4) unterhalb eines Sandfanges (6) od. dgl. aufgefangen ist,
dadurch gekennzeichnet,
daß in dem Filtergehäuse (1) bzw. in dem Filterraum (19) ein Stützgerüst für das Filtermaterial (16) angeordnet ist.

2. Desodorierungsfilter nach Anspruch 1, dadurch gekennzeichnet, daß als Filtergerüst in dem Filterraum (19) zumindest ein Zwischenboden (20) vorgesehen ist, der sich zwischen einem Boden (18) und einem Deckel (17) befindet und den Filterraum (19) in zumindest zwei Filterräume (19a, 19b) unterteilt.

3. Desodorierungsfilter nach Anspruch 2, dadurch gekennzeichent, daß Boden (18), Deckel (17) und Zwischenboden (20) mit Luftschlitzen (21) durchsetzt sind, welche zumindest teilkreisförmig das Fallrohr (13) umfangen.

4. Desodorierungsfilter nach einem der Ansprüche 1 bis 3, dadurch gekennzeichnet, daß das Filtergehäuse (1) einen teilzylindrischen Gehäusemantel (15) aufweist und der Filterraum (19) von einer entfernbaren Frontplatte (2) abgedeckt ist.

5. Desodorierungsfilter nach wenigstens einem der Ansprüche 1 bis 4, dadurch gekennzeichent, daß der Auffangtrichter (4) einen Boden (12) und eine diesen umfangende Ringwand aufweist, welche den Sandfang (6) umgibt, wobei der Sandfang (6) in dem Auffangtrichter (4) festgelegt ist.

6. Desodorierungsfilter nach Anspruch 5, dadurch gekennzeichnet, daß der Auffangtrichter (4) über Stege (9) mit dem Filtergehäuse (1) verbunden ist, welche zwischen sich Auslaßöffnungen (10) freilassen.

7. Desodorierungsfilter nach Anspruch 5 oder 6, dadurch gekennzeichent, daß die Ringwand (5) konisch verläuft.
